# EUROPÄISCHE PATENTSCHRIFT

(11) **EP 2 906 333 B1**
(45) Veröffentlichungstag und Bekanntmachung des Hinweises auf die Patenterteilung: **04.01.2017**
(21) Anmeldenummer: 13795407.9
(22) Anmeldetag: 04.09.2013
(51) Int. Cl.: B01F 3/10, B01F 15/04, B01F 15/02, B29B 7/60, B67D 7/64

(54) **MISCHVORRICHTUNG UND MISCHVERFAHREN**
MIXING DEVICE AND MIXING METHOD
DISPOSITIF MÉLANGEUR ET PROCÉDÉ DE MÉLANGE

(30) Priorität: 10.10.2012 AT 10972012
(43) Veröffentlichungstag der Anmeldung: 19.08.2015
(73) Patentinhaber: Waizenauer, Dietmar, 4531 Kematen an der Krems (AT); Waizenauer, Bernhard, 4511 Allhaming (AT)
(72) Erfinder: Waizenauer, Dietmar, 4531 Kematen an der Krems (AT); Waizenauer, Bernhard, 4511 Allhaming (AT)
(74) Vertreter: Ellmeyer, Wolfgang
(86) Internationale Anmeldenummer: PCT/AT2013/050171
(87) Internationale Veröffentlichungsnummer: WO 2014/056011

(56) Entgegenhaltungen:
- EP-A1- 1 407 872
- EP-A2- 1 754 543
- EP-B1- 1 331 072
- DE-A1-102007 003 972
- DE-U1-202011 108 222
- JP-A- 2005 133 676
- US-A- 4 651 897

## Beschreibung

Die Erfindung betrifft eine Mischvorrichtung zum Mischen von zumindest zwei Flüssigkeiten sowie ein Verfahren zum Mischen von zumindest zwei Flüssigkeiten.

### Stand der Technik

Das Entleeren von Behältern, in denen sich eine Flüssigkeit befindet, ist ein Routine-Vorgang in der Industrie. Viele Chemikalien und andere Rohstoffe, z.B. Öle, Dichtungsmittel, Klebstoffe, werden als Flüssigkeiten in die verarbeitende Industrie geliefert. Um im Produktionsprozess eingesetzt werden zu können, müssen die Flüssigkeiten den Behältern entnommen werden und dem Produktionsprozess zugeführt werden.

Die am Markt befindlichen Anlagen arbeiten mit Schöpfkolbenpumpen als Fördereinheit. Angetrieben werden diese abhängig von Hersteller pneumatisch, hydraulisch oder elektrisch. Schöpfkolbenpumpen müssen linear angetrieben werden und fördern einen pulsierenden Materialstrom, da sie einen Totpunkt besitzen und die Änderung der Bewegungsrichtung nicht unendlich schnell durchgeführt werden kann. Schöpfkolbenpumpen fördern das Material nur bedingt volumetrisch, d.h. es kann nicht genau definiert werden, welche Fördermenge bei einem bestimmten Weg gefördert wird, da diese Pumpen bei der Umschaltung der Bewegungsrichtung undefiniert Material fördern. Die eingebauten Rückschlagventile öffnen und schließen abhängig der Viskosität unterschiedlich. Eine Schöpfkolbenpumpe bringt daher systembedingte Nachteile mit sich, die es beim täglichen Arbeiten zu vermeiden gilt. Da die Schöpfkolbenpumpe systembedingt unter die Folgeplatte bzw. Pumpengehäuse "schöpfen" muss, bleibt eine große Restmenge im Fass zurück bzw. im Einlauftrichter der Folgeplatte.

Weiters kann eine Vorrichtung zum Entleeren von Behältern auch zum Mischen von Flüssigkeiten aus zwei verschiedenen Behältern verwendet werden. Grundsätzlich gibt es Förderanlagen mit festem Mischungsverhältnis und mit variablem Mischungsverhältnis.

### Konstantes Mischungsverhältnis 1:1

Die Schöpfkolbenpumpen werden mechanisch/hydraulisch oder elektrisch gekoppelt, damit diese zu jedem Zeitpunkt dieselbe Position und somit auch gleichen Umschaltzeitpunkt besitzen. Da die Viskosität von Komponente A und Komponente B herstellerabhängig stark differenzieren kann, besteht die Möglichkeit, dass das volumetrische Mischungsverhältnis abweicht. Zusätzlich dazu kann auf ungleich gefüllte Materialgebinde kein Einfluss genommen werden und große Mengen an Material von einer Komponente übrig bleiben.

### Variables Mischungsverhältnis

Das Mischungsverhältnis kann frei eingestellt werden. Die Förderpumpen arbeiten unabhängig voneinander und mischen die Medien im eingestellten Mischungsverhältnis und einer festgelegten Toleranz miteinander. Bei variablen Mischungsverhältnissen besteht zusätzlich die Möglichkeit, dass der Füllstand der Fässer die Fördermenge je Komponente beeinflusst, damit die Behälter sich gleichmäßig entleeren. Um ein variables Mischungsverhältnis einzustellen, sind die Fördereinheiten von Komponente A und Komponenten B nicht miteinander gekoppelt. Herstellerabhängig werden volumetrische Messeinrichtungen zur Regelung in die Schlauchleitungen angebracht. Der Förderdruck bei derzeitigen Systemen liegt bei ca. 150-200 bar abhängig von der Viskosität und Schlauchlänge. Für einen konstanten Förderdruck wird am Ende der Schlauchleitung ein Druckreduzierventil verbaut, welches den Anlagendruck auf einen konstant eingestellten Druck reduziert, um Schwankungen der Förderpumpen auszugleichen.

EP 1 331 072 B1 beschreibt ein Verfahren für die Steuerung einer Vorrichtung zur Entnahme von flüssigen Materialien mithilfe einer Schöpfkolbenpumpe. Die Schöpfkolbenpumpen werden mit unterschiedlichen Impulsfrequenzen angesteuert.
DE 20 2011 108 222 U1 beschreibt eine Vorrichtung zum Ausbringen von flüssigen Komponenten einer Mehrkomponentenrezeptur, die Fördereinrichtungen umfasst, die eine Pumpe umfassen, die über einen elektrischen Antrieb betrieben sind, wobei Sensoren die Füllhöhe anzeigen und mit einer Steuer- und Regeleinrichtung verbunden sind, welche die Ausbringung der Komponenten steuern. Als Beispiel für eine Pumpe ist eine Schöpfkolbenpumpe erwähnt, die auf einer Folgeplatte angeordnet ist.

EP 1 407 872 A1 offenbart eine Mischvorrichtung gemäß dem Oberbegriff des Anspruchs 1.

Ziel der Erfindung ist es daher, eine Vorrichtung zum Mischen von zumindest zwei Flüssigkeiten bereitzustellen, die eine restlose Entleerung ermöglicht und einen pulsationfreien Materialstrom liefert sowie volumetrisch fördert. Erfindungsgemäß wird dies dadurch erreicht, indem eine Mischvorrichtung bereitgestellt wird, wobei die Pumpen Schraubenspindelpumpen sind, die Pumpen mit einer Folgeplatte verbunden sind und die Folgeplatte in der Höhe verstellbar ist, wobei die Folgeplatte auf der Flüssigkeitsoberfläche aufliegt und dichtend mit dem Behälter abschließt.

Durch eine solche Mischvorrichtung ist eine pulsationsfreie und volumetrische Förderleistung gewährleistet. Das Mischungsverhältnis, wenn zumindest zwei Behälter vorgesehen sind, ist frei wählbar. Volumetrische Messeinrichtungen werden aufgrund der volumetrischen Förderer nicht benötigt. Weiters ist diese Mischvorrichtung energiesparend, da volumetrische Messeinrichtungen, welche einen sehr hohen Druckabfall hervorrufen, entfallen. Bei sehr kleinen Dosiermengen können volumetrische Messeinrichtungen die Menge nicht erfassen bzw. benötigen einen Mindestdurchfluss. Dies kann zu falschen Mischungsverhältnissen führen. Optional können volumetrische Messeinrichtungen zusätzlich eingesetzt werden, um eine parallele Messung durchzuführen, damit eine höhere Messsicherheit erlangt werden kann bzw. zusätzlich verifiziert wird.

Die Energieersparnis wird dadurch erreicht, dass der Anlagendruck jeder Komponente an den Schlauchenden unmittelbar vor der Verarbeitungseinheit gemessen wird und der zugehörige Förderer drehzahlgeregelt wird. Die Förderpumpen müssen nur den notwendigen Druck erzeugen, welcher aufgrund des Druckabfalls in der Schlauchleitung entsteht. Es entfällt das Druckreduzierventil, welches den Systemdruck bei der Verarbeitungseinheit reduziert. Es wird davon ausgegangen, dass, wenn zwei Materialien mit einem konstanten Druck vermengt werden und dazu das Fördervolumen der Förderpumpen abgeglichen ist, ein sehr exaktes Mischungsverhältnis, unabhängig von der unterschiedlichen Viskosität der Materialien, erreicht wird.

Vorteile der Schraubenspindelpumpe:
Ein wesentlicher Vorteil der Schraubenspindelpumpe liegt darin, dass diese einen konstanten Förderdruck bzw. ein konstantes Fördervolumen hat. Es ist zu jedem Zeitpunkt das exakte Mischungsverhältnis sichergestellt. Bisher verwendete Schöpfkolbenpumpen fördern einen nicht konstanten Förderstrom, dadurch kommt es bei der Umschaltung der Bewegungsrichtung zu einer kurzzeitigen Änderung des Mischungsverhältnisses.

Ein weiterer Vorteil der Schraubenspindelpumpe liegt in der Überwachung des Volumenstromes. Mithilfe eines Druckaufnehmers und der Drehzahl der Förderpumpe werden Kenndaten des zu fördernden Mediums ermittelt. Weichen diese Werte während der Produktion von den ermittelten ab, kann ein Alarm ausgegeben werden oder die Anlage kann entsprechend auf die Veränderung reagieren. Es kann zum Beispiel ein Behälter restlos entleert werden, da bei vollständiger Entleerung der Unterdruck auf der Saugseite zu groß wird und der Förderdruck zur Drehzahl abweicht.

Grundsätzlich erfolgt die Förderung mit einer Schraubenspindelpumpe volumetrisch. Jedoch ist es bei Flüssigkeiten mit sehr hohen Viskositäten möglich, dass bei einer Umdrehung der Schraubenspindelpumpe nicht das gleiche Volumen gefördert wird wie bei einer Flüssigkeit mit einer niedrigen Viskosität. Eine solche Abweichung, die aber nur gering ist, kann aber leicht durch Kalibrationskurven ermittelt werden, die mitunter auch selbst erstellt werden können.

Die Schraubenspindelpumpe benötigt einen sehr kleinen Einlauftrichter auf der Folgeplatte und sitzt unmittelbar an der Unterkante der Folgeplatte. Dieser Zustand hat diesen Vorteil, dass die Behälter nahezu restlos entleert werden können und dass bei einem Fasswechsel die Menge des mit Luft vermischten Materials viel geringer ist als mit einer bisher verwendeten Schöpfkolbenpumpe. Es muss weniger Material gespült werden. Man hat eine Material- und Zeitersparnis. Es muss weniger gespültes Material entsorgt werden.

Ein weiterer Vorteil der Schraubenspindelpumpe ist der große Viskositätsbereich, in dem die Förderpumpe betrieben werden kann. Diese kann von Wasser (Viskosität 1 mPa.s) bis zu höchst viskosen Medien (3.000.000 mPa.s) fördern. Bisher verwendete Schöpfkolbenpumpen haben einen begrenzten Förderbereich meist bis 1.500.000 mPa.s.

In einer Ausführungsform der vorliegenden Erfindung kann nach der Pumpe - in Förderrichtung gesehen - ein Schlauch vorgesehen sein, der ein Ventil zur Beimengung von Additiven aufweist. Das Beimengen eines Additivs zur geförderten Flüssigkeit ist oftmals ein Erfordernis im Produktionsprozess. Beispielsweise kann Farbe, ein Reaktionsbeschleuniger, ein Verdünnungsmittel, ein Farbstoff oder dergleichen hinzugefügt werden. Die Beimengung kann beispielsweise mittels Additivventilen erfolgen, wobei eine gewisse Menge Additiv zum Volumenstrom in Abständen hinzudosiert wird. Das Volumen, welches zeitlich beigemengt wird, ist abhängig von dem jeweiligen Dosierweg und dem Dosierkolbendurchmesser. Das Beimengen kann diskontinuierlich oder kontinuierlich erfolgen.

In einer anderen Ausführungsform der Erfindung kann die Flüssigkeit eine Viskosität im Bereich von 1 mPa.s bis 3.000.000 mPa.s aufweisen. D.h. die Vorrichtung ist für eine Flüssigkeit mit einer Viskosität im Bereich von 1 mPa.s bis 3.000.000 mPa.s geeignet. Mit dieser Mischvorrichtung können sowohl dünnflüssige als auch hochviskose Flüssigkeiten vermischt werden. Die zu mischenden Flüssigkeiten können die gleiche Viskosität aufweisen oder können unterschiedliche Viskositäten aufweisen.

In einer wiederum anderen Ausführungsform der Erfindung kann die Flüssigkeit eine Viskosität im Bereich von 100.000 mPa.s bis 3.000.000 mPa.s aufweisen. D.h. die Vorrichtung ist für eine Flüssigkeit mit einer Viskosität im Bereich von 100.000 mPa.s bis 3.000.000 mPa.s geeignet. Solche Flüssigkeiten sind für industrielle Anwendungen besonders bevorzugt.

In einer Ausbildung der Erfindung kann die Mischvorrichtung eine Einrollvorrichtung zum einfachen Befördern des Behälters an die Stelle der Entleerung umfassen. Eine solche Einrollvorrichtung ist beispielsweise eine Platte, auf die der Behälter gestellt werden kann und die zu der gewünschten Stelle in der Vorrichtung bewegt werden kann. Dadurch entfällt ein mühsames Rangieren des Behälters an die richtige Stelle.

In einer anderen Ausbildung der vorliegenden Erfindung kann die Mischvorrichtung Transportrollen aufweisen. Soll die Vorrichtung bewegt werden, kann sie auf den Transportrollen bewegt werden. Die Transportrollen können fixierbar und/oder einklappbar sein. Ist die Mischvorrichtung am gewünschten Platz, können die Transportrollen fixiert werden und/oder eingeklappt werden. Somit kann die Mischvorrichtung nicht mehr verrutschen.

In einer Ausführungsform der Erfindung kann die Folgeplatte ein automatisiertes Entlüftungsventil aufweisen. Über das Entlüftungsventil kann der Behälter entlüftet werden. Zwangsläufig enthält der Behälter nach Aufsetzen der Folgeplatte Luft, die vor dem Beginn der Materialentnahme entfernt werden muss, da die eingeschlossene Luft dem Produktionsprozess nicht zugeführt werden darf und in weiterer Folge die Messwerte verfälscht. Die Entfernung von Luft erfolgt idealerweise über ein Entlüftungsventil.

In einer anderen Ausführungsform der Erfindung kann ein Druckaufnehmer am Pumpenausgang vorgesehen sein. Mit diesem Druckaufnehmer ist die Messung des Drucks nach der Pumpe möglich, was Rückschlüsse auf die eventuell noch enthaltene Menge Luft und/oder auf die geförderte Menge Flüssigkeit zulässt. Ein Druckaufnehmer kann beispielsweise ein Manometer sein.

In einer anderen Ausführungsform kann eine Steuereinheit vorgesehen sein, die durch Messen des Förderdrucks am Druckaufnehmer das automatisierte Entlüftungsventil steuert, wobei der Förderdruck bei geschlossenem Entlüftungsventil mit dem Soll-Wert einer luftfreien Flüssigkeit verglichen wird und das Entlüftungsventil so oft und so lange geöffnet wird, bis der Förderdruck bei geschlossenem Entlüftungsventil mit dem Soll-Wert übereinstimmt, woraufhin das Entlüftungsventil geschlossen bleibt. Durch diese Steuereinheit ist die automatisierte Entlüftung des Behälters möglich. Bei einer luftfreien Flüssigkeit liegt ein ihr spezifischer Förderdruck an, der sich ändert, wenn Luft eingeschlossen ist. Der Druckaufnehmer misst den Förderdruck, und die Steuereinheit vergleicht diesen Steuerdruck mit dem Soll-Wert der luftfreien Flüssigkeit. Stimmen die Werte nicht überein, öffnet die Steuereinheit das Entlüftungsventil. Vor dem nächsten Vergleich wird das Entlüftungsventil wieder geschlossen und die Werte wieder verglichen. Stimmen der gemessene Wert und der Soll-Wert überein, bleibt das Entlüftungsventil geschlossen, und der Mischvorgang kann durchgeführt werden.

In einer anderen Ausführungsform der Erfindung kann die Steuereinheit die Umdrehungen bzw. Drehwinkelposition der Pumpenwelle bzw. des Pumpenantriebs auswerten. Auf diese Weise erfolgt eine effiziente Überprüfung des Luftgehalts in der Flüssigkeit.

In wiederum einer anderen Ausführungsform können Sensoren am Hubzylinder angeordnet sein, die die Füllhöhe des Behälters messen und mit einer Regeleinheit verbunden sind, die wiederum mit der Pumpe verbunden ist und über welche Regeleinheit die Pumpen zur gleichmäßigen Entleerung von zumindest zwei Behältern steuerbar sind. Die gleichmäßige Entleerung von z.B. zwei Behältern ist bei Chargenbetrieb von außergewöhnlicher Bedeutung, da jeder Behälter eine eigene Chargennummer aufweist und geringe Unterschiede zwischen den Chargen auftreten können. Aus diesem Grund kann ein nicht vollständig entleerter Behälter nicht zur Mischung mit einem anderen neuen Behälter verwendet werden; der verbleibende Inhalt muss kostenpflichtig entsorgt werden. Durch diese Anordnung mit Sensor, der die Füllhöhe es Behälters misst und über eine Regeleinheit die Entleerung regelt, wird das Verbleiben von Rest-Flüssigkeit in einem Behälter vermieden; beide Behälter werden vollständig entleert. Es kann auch sein, dass produktionstechnisch die beiden verwendeten Behälter nicht gleich hoch gefüllt sind (dies kann u.a. auch durch verschiedene Viskositäten der Flüssigkeiten in den Behältern verursacht sein); in diesem Fall ist ein Ausgleich der Füllhöhen ebenfalls notwendig.

In einem anderen Aspekt betrifft die Erfindung ein Verfahren zum Mischen von zumindest zwei Flüssigkeiten, wobei in einer Mischvorrichtung wie oben beschrieben zumindest zwei Behälter angeordnet werden, eine Folgeplatte, die dichtend mit dem Behälter abschließt, auf die Flüssigkeitsoberfläche aufgelegt wird, die Luft zwischen Flüssigkeitsoberfläche und Folgeplatte entfernt wird und die Flüssigkeiten aus den zumindest zwei Behältern durch jeweils eine Schraubenspindelpumpe gefördert werden und die Materialströme in weiterer Folge vereinigt werden, wodurch die Vermischung erfolgt. Dieses Verfahren hat den Vorteil der pulsationsfreien Förderung und in weiterer Folge Mischung von zumindest zwei Flüssigkeiten.

In einer Ausführungsform der Erfindung kann die Luft zwischen Flüssigkeitsoberfläche und Folgeplatte entfernt werden, indem eine Steuereinheit durch Messen des Förderdrucks am Druckaufnehmer ein automatisiertes Entlüftungsventil steuert, wobei der Förderdruck bei geschlossenem Entlüftungsventil mit dem Soll-Wert einer luftfreien Flüssigkeit verglichen wird und das Entlüftungsventil so oft und so lange geöffnet wird, bis der Förderdruck bei geschlossenem Entlüftungsventil mit dem Soll-Wert übereinstimmt, woraufhin das Entlüftungsventil geschlossen bleibt. Durch diese Steuereinheit ist die automatisierte Entlüftung des Behälters möglich. Bei einer luftfreien Flüssigkeit liegt ein ihr spezifischer Förderdruck an, der sich ändert, wenn Luft eingeschlossen ist. Der Druckaufnehmer misst den Förderdruck, und die Steuereinheit vergleicht diesen Steuerdruck mit dem Soll-Wert der luftfreien Flüssigkeit. Stimmen die Werte nicht überein, öffnet die Steuereinheit das Entlüftungsventil. Vor dem nächsten Vergleich wird das Entlüftungsventil wieder geschlossen und die Werte wieder verglichen. Stimmen der gemessene Wert und der Soll-Wert überein, bleibt das Entlüftungsventil geschlossen.

In einer anderen Ausführungsform der Erfindung kann die Steuereinheit die Umdrehungen bzw. Drehwinkelposition der Pumpenwelle bzw. des Pumpenantriebs auswerten. Auf diese Weise erfolgt eine effiziente Überprüfung des Luftgehalts in der Flüssigkeit.

In einer Ausbildung der Erfindung können Sensoren, die am Hubzylinder angeordnet sind, die Füllhöhe des Behälters messen, wobei die Sensoren mit einer Regeleinheit verbunden sind, die wiederum mit der Pumpe verbunden ist, wobei die Regeleinheit die Pumpen zur gleichmäßigen Entleerung von zumindest zwei Behältern steuert. Die gleichmäßige Entleerung von z.B. zwei Behältern ist bei Chargenbetrieb von außergewöhnlicher Bedeutung, da jeder Behälter eine eigene Chargennummer aufweist und geringe Unterschiede zwischen den Chargen auftreten können. Aus diesem Grund kann ein nicht vollständig entleerter Behälter nicht zur Mischung mit einem anderen neuen Behälter verwendet werden; der verbleibende Inhalt muss kostenpflichtig entsorgt werden. Durch diese Anordnung mit Sensor, der die Füllhöhe es Behälters misst und über eine Regeleinheit die Entleerung regelt, wird das Verbleiben von Rest-Flüssigkeit in einem Behälter vermieden; beide Behälter werden vollständig entleert. Es kann auch sein, dass produktionstechnisch die beiden verwendeten Behälter nicht gleich hoch gefüllt sind (dies kann u.a. auch durch verschiedene Viskositäten der Flüssigkeiten in den Behältern verursacht sein); in diesem Fall ist ein Ausgleich der Füllhöhen ebenfalls notwendig.

In einem anderen Aspekt betrifft die Erfindung die Verwendung einer Mischvorrichtung wie oben beschrieben zum Mischen von zumindest zwei Flüssigkeiten. Durch diese Verwendung können zumindest zwei Flüssigkeiten pulsationsfrei vermischt werden.

In wiederum einem anderen Aspekt betrifft die Erfindung die Verwendung einer Mischvorrichtung wie oben beschrieben in einem Verfahren wie oben beschrieben. Durch diese Verwendung in solch einem Verfahren können zumindest zwei Flüssigkeiten pulsationsfrei vermischt werden.

### Kurzbeschreibung der Zeichnungen

In den Figuren werden folgende Bezugszeichen verwendet:
1 Hubzylinder für Folgeplatte
2 Servo-Antriebseinheit mit Getriebe
3 Verbindungsflansch Antrieb - Pumpenkörper
4 Pumpenkörper
5 Folgeplattenentlüftung
6 Folgeplatte
7 Einrollvorrichtung zum Bewegen der Behälter
8 Verkleidung Bedieneinheit
9 Schieber umschaltbar (Entlüftungsstellung / Betriebsstellung)
10 Druckaufnehmer Pumpenausgang
11 Steckverbindung Codierung Folgeplattengröße
12 Transportrollen fixierbar
13 Zugstange
14 Folgeplattendichtung
15 Behälter

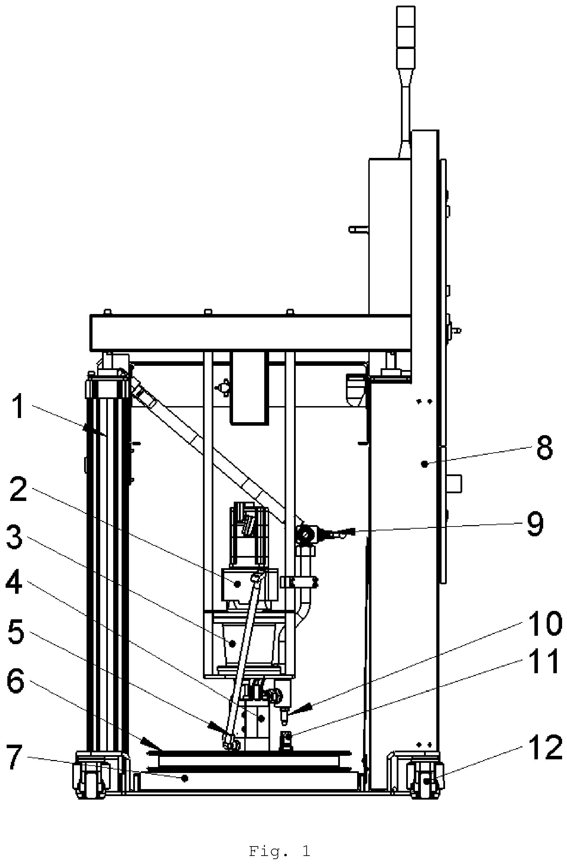

Fig. 1. zeigt eine schematische Darstellung einer erfindungsgemäßen Vorrichtung.

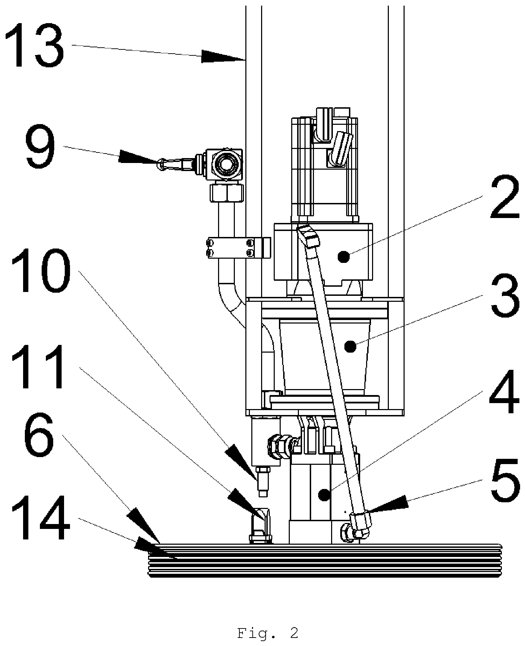

Fig. 2 zeigt einen Ausschnitt einer erfindungsgemäßen Vorrichtung.

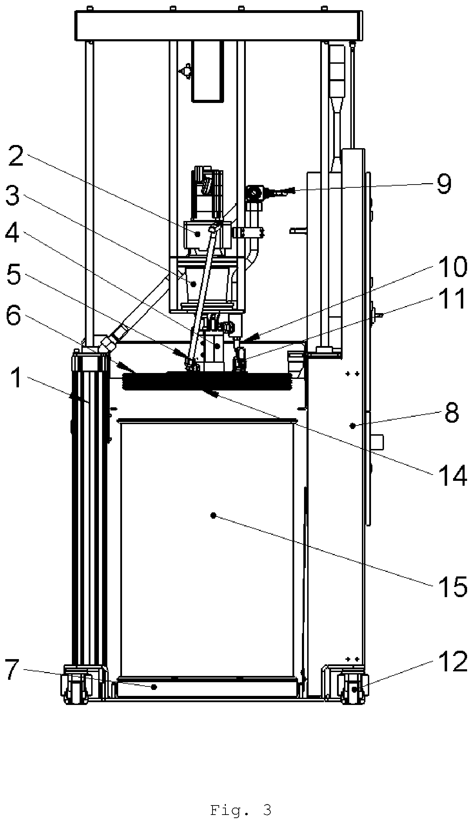

Fig. 3 zeigt eine schematische Darstellung einer erfindungsgemäßen Vorrichtung, in der ein Behälter angeordnet ist.

### BEISPIELE

### Beispiel 1

Ein Beispiel für eine erfindungsgemäße Vorrichtung ist wie folgt aufgebaut.

Ein Hubzylinder 1 für die Folgeplatte 6 kann die Folgeplatte 6 auf und ab bewegen. Die Folgeplatte 6 kann verschiedene Durchmesser aufweisen und ist an den zu entleerenden Behälter 15 angepasst. Die Folgeplatte 6 weist eine Folgeplattenentlüftung 5 auf. Beim Aufsetzen der Folgeplatte 6 auf den Behälter 15 muss Luft entweichen können; dies erfolgt über die Folgeplattenentlüftung 5. Eine Servo-Antriebseinheit 2 mit einem Getriebe ist über einen Verbindungsflansch 3 mit dem Pumpenkörper 4 verbunden. Die Antriebsbewegung erfolgt rotatorisch. Der Pumpenkörper 4 ist eine Schraubenspindelpumpe bzw. Schraubenpumpe. Diese Schraubenspindelpumpe bzw. Schraubenpumpe ist eine Konstantstrompumpe. Eine Einrollvorrichtung 7 zum Bewegen des Behälters kann vorgesehen sein. Mit dieser Einrollvorrichtung 7 kann der Behälter 15 ohne großen Kraftaufwand an die richtige Stelle unter der Pumpe 4 bewegt werden. Die Vorrichtung kann mit einer Verkleidung 8 verkleidet sein, um scharfkantige Kanten zu verdecken und die Betriebssicherheit zu erhöhen. Ein Schieber 9 kann vorgesehen sein, um zwischen Entlüftungsstellung und Betriebsstellung umzuschalten. Ein Druckaufnehmer 10 am Pumpenausgang dient zur Druckregelung bzw. Überdruckabsicherung an der Pumpe. Ein Druckaufnehmer im Bereich der Verarbeitungseinheit dient zur Regelung des Anlagedruckes. Die Folgeplatte 6 ist mit einer Steckverbindung 11 zur Codierung der Folgeplattengröße mit der Förderanlage verbindbar. Transportrollen 12, die fixierbar und/oder einklappbar sind, sind ebenfalls vorgesehen. Eine Zugstange 13 dient zur Befestigung der verschiedenen Teile. Freistellungen in der Grundplatte dienen als Transportmöglichkeit der Dosieranlage mittels Hubwagen oder Stapler.

Der Behälter 15 ist meistens ein Fass. Als Dichtung dient eine statische Dichtung. Es kann eine aufblasbare Dichtung für 20-1- und 200-1-Fässer verwendet werden. Dadurch besteht die Möglichkeit, leicht beschädigte Fässer verarbeiten zu können. Als Vorteile können die variable Abdichtung einstellbar für die Viskosität des zu fördernden Materials, ein leichterer Wechsel der Behälter 15, da die Dichtung bei dem Ausfahren der Folgeplatten nicht anliegt und die Behälter 15 nicht hochgehoben werden müssen, angeführt werden. Die Folgeplatten 6 können im Leichtbau ausgeführt sein (Gewicht unter 15 kg, Wechsel für Bedienpersonal lt. Arbeitsschutz möglich).

Die Vorrichtung kann auf Rollen 12 ausgeführt sein, wobei eine Arretierung in den Rollen 12 integriert sein kann. Dadurch wird ein Fortrollen während des Betriebs verhindert.

Die Schlauchführung kann mit Drehgelenken erfolgen, welche eine sehr kurze Schlauchlänge im Bereich der beweglichen Platten ermöglicht. Dadurch entsteht ein geringerer Druckabfall, wodurch der Energieverbrauch verringert wird.

Schraubenspindelpumpen erzeugen einen konstanten Volumenstrom. Der Druck vor der Verarbeitungseinheit wird genau geregelt. Dadurch kann auf den Volumenstrom rückgerechnet werden. Da das Material in den Materialschläuchen stark komprimierbar ist und die Schläuche sich ausdehnen und wie ein Speicher wirken, muss die Regelschleife alle Störfaktoren miteinbeziehen.

Die Flüssigkeit in dem Behälter ist beispielsweise flüssiger Silikonkautschuk (LSR), Klebstoffe, Harze, Lebensmittel usw.

Zumindest zwei dieser Vorrichtungen sind miteinander zu einer Mischvorrichtung gemäß der Erfindung gekoppelt. Diese zumindest zwei Vorrichtungen bzw. Entnahmevorrichtungen können miteinander kombiniert werden, sodass die zumindest zwei Flüssigkeiten in dem gewünschten Mischungsverhältnis entnommen werden und im abführenden Schlauch im richtigen Mischungsverhältnis vorliegen. D.h. die Schläuche aus jeweils einer Vorrichtung werden zu einem Schlauch vereinigt, der dann die Flüssigkeiten im gewünschten Verhältnis gemischt aufweist. Es können auch mehr als zwei Vorrichtungen bzw. Entnahmevorrichtungen vorgesehen sein, je nach Wunsch der gewünschten, zu mischenden Flüssigkeiten.

### Beispiel 2: Spritzguss

Die gebräuchlichste Form der LSR-Verarbeitung (LSR steht für "liquid silicone rubber", also flüssigen Silikonkautschuk) ist die Anwendung im klassischen Spritzgießverfahren im Verbund mit einer Spritzgießmaschine. Hierbei wird das Material im Mischungsverhältnis 1:1 in die Förderschnecke der Spritzgießmaschine dosiert. Diese spritzt das Material in die heiße Form ein.

### Beispiel 3: Direkt-Verguss

Weitere Anwendungsgebiete dieser Förder- und Mischanlagen finden sich im direkten Verguss, in dem ohne Zuhilfenahme einer Spritzgießmaschine das Material direkt in ein Werkzeug gefördert wird. Weitere Materialien können natürlich auch gefördert werden wie z.B. Harze und Klebstoffe.

### Beispiel 4

Bei einer Vorrichtung wie im Beispiel 2 angeführt kann der Mischblock mit jeweils einem Rückschlagventil ausgerüstet sein, um das Rückfließen von einer Komponente in die Zuführung der anderen Komponente zu verhindern. Eventuell ist es notwendig, den Materialdruck des bereits gemischten Materials nach der Absperreinheit zu messen, um den Regler stabiler zu machen.

Optional kann noch der Volumenstrom gemessen werden, da für die exakte Additivbeimengung der genaue derzeitige Volumenstrom bekannt sein muss.

### Beispiel 5

Bei der Zugabe eines Additivs, z.B. einer Farbe, kann der Volumenstrom aus der derzeitigen Drehzahl und Druck errechnet werden. Die Einspritzeinheit der Additivzugabe spritzt proportional zum Volumenstrom das Additiv bei.

### Beispiel 6

Bei der Zugabe eines Additivs, z.B. einer Farbe, kann der Volumenstrom mithilfe von volumetrischen Messeinrichtungen gemessen werden. Die Einspritzeinheit der Additivzugabe spritzt proportional zum Volumenstrom das Additiv bei.

### Beispiel 7

Beim Direkteinspritzen in Gussformen können für großvolumige Teile, welche im Vergussverfahren hergestellt werden, oft sehr hohe Materialmengen notwendig sein. Die Einspritzung erfolgt direkt von der Förderpumpe an das Werkzeug. Auf der Bedienoberfläche kann man das Spritzprofil (Menge, Zeit) einstellen. Optional kann der Einsatz von Forminnendruck-Sensoren das Einspritzen regeln.

### Beispiel 8: Automatische Entlüftung

Nach erfolgtem Gebindewechsel wird Luft in das Fördersystem eingebracht. Diese muss zwingend aus dem System entfernt werden. Bei Verbleiben von Luft im System ist der nachgeschaltete Prozess stark beeinträchtigt, und es kann zu Produktionsausfällen kommen. Wenn die Luft die meist längeren Materialschläuche erreicht, muss eine große Menge Material durch das gesamte System gespült werden. Dieser manuelle Vorgang ist auf die optische und akustische Wahrnehmung der Bediener angewiesen. Es kann nicht mit Sicherheit gesagt werden, ob die gesamte Luft aus dem System entlüftet ist. Meist wird deshalb mehr Material abgelassen als notwendig ist, da es eine gewisse Zeit lang blasenfrei entnommen werden muss.

Um die Luft zu entfernen, ist in der Vorrichtung nach Beispiel 1 in der Folgeplatte 6 ein automatisiertes Entlüftungsventil 5 integriert oder auf der Folgeplatte 6 aufgebaut, welches von der Steuerung geöffnet und geschlossen werden kann. Der am Pumpenausgang montierte Druckaufnehmer 10 misst den Förderdruck. Die Umdrehungen bzw. Drehwinkelposition der Pumpenwelle bzw. des Pumpenantriebs werden ausgewertet.

Der Bediener betätigt die Bedienelemente zum Senken der Folgeplatte 6 in den Materialbehälter. Die Förderanlage erkennt, dass die Folgeplatte 6 auf der Flüssigkeit oder dem Luftpolster im Fass 15 aufliegt (keine Veränderung der Folgeplattenposition), und öffnet die Folgeplattenentlüftung 5. Die eingesperrte Luft am Pumpeneingang und die Menge X-Material aus der Folgeplatte 6 kann entweichen. Das Entlüftungsventil 5 schließt sich nach einer vorgegebenen Zeit. Anschließend startet die Pumpe 4 den Messablauf gegen das geschlossene hydraulische System. Misst der Druckaufnehmer 10 nicht den Soll-Wert (d.h. den Wert der Flüssigkeit ohne Luft), wird das Entlüftungsventil 5 wieder geöffnet, damit Luft entweichen kann. Ergibt die nächste Messung den Soll-Wert, bleibt das Entlüftungsventil 5 geschlossen, und die Anlage geht in den Automatikmodus.

Gegebenenfalls kann am Pumpenausgang ein zweites automatisches Ventil 9 montiert sein, welches den Pumpendruck abbaut, damit eine erneute Messung der Luft möglich ist.

Gegebenenfalls kann der Pumpendruck auch durch Umkehrung der Förderrichtung der Pumpe (Drehrichtungsänderung) abgebaut werden, damit eine erneute Messung der Luft möglich ist.

Gegebenenfalls können die Entlüftungsschieber 5 auch manuell bedient werden (es erfolgt eine Aufforderung von der Steuerung an den Bediener in Dialogform).

Das Auswerteprinzip ist so definiert, dass sich die Pumpe 4 zu drehen beginnt, wobei die Information des Druckaufnehmers 10 am Pumpenausgang mit dem Drehwinkel der Pumpe 4 verglichen wird. Wenn Luft im System ist bzw. am Pumpeneingang ansteht, wird dies über den Zusammenhang zwischen Druck und Drehwinkel ausgewertet. Diese Informationen werden mit Standardwerten verglichen (wenn keine Luft im System ist). Anhand des Druckanstieges zur Umdrehung der Pumpe 4 kann auf die eingeschlossene Luft rückgerechnet werden (Komprimierbarkeit des Materials). Eine Auswertung über die Pulsation des Druckes ist auch möglich. Falls die Anlage Luft im System erkennt, wird der aufgebaute Pumpendruck abgebaut und das Entlüftungsventil 5 auf der Folgeplatte 6 geöffnet und eine gewisse Menge Material bzw. Luft abgelassen. Anschließend wird das Entlüftungsventil 5 wieder geschlossen und gemessen, ob sich noch immer Luft im System befindet. Dieser Vorgang wird so oft wiederholt, bis die Druckanstiegskurve stabil ist bzw. sich auf die Standardwerte genähert hat.

### Beispiel 9: Ausgleich verschiedener Füllhöhen

Aufgrund der Möglichkeit, dass sich die zu mischenden Materialien in der Viskosität unterscheiden können, ist es möglich, dass dies bei Anlagen mit einem volumetrischen Fördervolumen und einer Mischung von 1:1 zu einer ungleichen Entleerung der Materialbehälter führen kann. Oft ist auch in der Praxis das vom Hersteller gelieferte Gebinde nicht gleich hoch gefüllt (Komponente A und B sind vom Volumen her unterschiedlich). Da die Gebinde A und B gleichzeitig entleert werden müssen (Chargenherstellprozess) und diese nicht wahlweise getauscht werden können, kommt es bei einem fixen Mischungsverhältnis zu einer ungleichen Entleerung und einem Restmaterialgehalt in einem Behälter, wobei sich der zweite Behälter schon komplett entleert hat. Somit kann es vorkommen, dass sich 10 % Restmaterial in einem Behälter befinden, welche nicht mehr weiter verarbeitet werden können und somit als Sondermüll entsorgt werden müssen. Dies bedeutet eine erhöhte Umweltbelastung und für den Anwender zusätzlich eine finanzielle Belastung.

Herstellerabhängig können die Silikone mit einer geringen Abweichung von +-5% (abhängig vom Hersteller-Datenblatt des Silikons) vermengt werden. Dies erlaubt eine Angleichung des Mischungsverhältnisses, damit die Behälter gleichzeitig entleert werden können (falls die Füllhöhe +5 % der maximalen Abweichung nicht überschreitet).

Die Materialbehälter werden gleichzeitig eingewechselt, und nach dem Entlüftungsvorgang wird mit einem Sensor, der am Hubzylinder 1 angeordnet ist, die Fassfüllhöhe ermittelt. Aus der Abweichung wird das nötige Mischungsverhältnis errechnet; die Regeleinheit regelt dann die Pumpen 4 in dem Ausmaß, dass beide Behälter gleichmäßig und vollständig geleert werden. Das nötige Mischungsverhältnis wird während der Produktion erneut neu berechnet, um etwaige Viskositätsunterschiede im Gebinde zu kompensieren.

## Patentansprüche

1. Mischvorrichtung zum Mischen von zumindest zwei Flüssigkeiten, umfassend zumindest zwei Behälter (15), in denen sich jeweils eine Flüssigkeit befindet, und zumindest zwei Pumpen (4) zum Befördern der Flüssigkeiten, welche Pumpen (4) jeweils an einem Behälter (15) angeordnet sind, wobei die Pumpen (4) mit einer Folgeplatte (6) verbunden sind und die Folgeplatte (6) in der Höhe verstellbar ist, wobei die Folgeplatte (6) auf der Flüssigkeitsoberfläche aufliegt und dichtend mit dem Behälter (15) abschließt, **dadurch gekennzeichnet, dass** die Pumpen (4) Schraubspindelpumpen sind.

2. Vorrichtung nach Anspruch 1, **dadurch gekennzeichnet, dass** nach der Pumpe (4) - in Förderrichtung gesehen - ein Schlauch vorgesehen ist, der ein Ventil zur Beimengung von Additiven aufweist.

3. Mischvorrichtung nach Anspruch 1 oder 2, **dadurch gekennzeichnet, dass** die Flüssigkeit eine Viskosität im Bereich von 1 mPa.s bis 3.000.000 mPa.s aufweist.

4. Mischvorrichtung nach einem der Ansprüche 1, 2 oder 3, **dadurch gekennzeichnet, dass** die Flüssigkeit eine Viskosität im Bereich von 100.000 mPa.s bis 3.000.000 mPa.s aufweist.

5. Mischvorrichtung nach einem der vorangegangenen Ansprüche, **dadurch gekennzeichnet, dass** die Mischvorrichtung eine Einrollvorrichtung (7) zum einfachen Befördern der Behälter (15) an die Stelle der Entleerung umfasst.

6. Mischvorrichtung nach einem der vorangegangenen Ansprüche, **dadurch gekennzeichnet, dass** die Mischvorrichtung Transportrollen (12) aufweist.

7. Mischvorrichtung nach einem der vorangegangenen Ansprüche, **dadurch gekennzeichnet, dass** die Folgeplatte (6) ein automatisiertes Entlüftungsventil (5) aufweist.

8. Mischvorrichtung nach einem der vorangegangenen Ansprüche, **dadurch gekennzeichnet, dass** ein Druckaufnehmer (10) am Pumpenausgang vorgesehen ist.

9. Mischvorrichtung nach Anspruch 8, **dadurch gekennzeichnet, dass** eine Steuereinheit vorgesehen ist, die durch Messen des Förderdrucks am Druckaufnehmer (10) das automatisierte Entlüftungsventil (5) steuert, wobei der Förderdruck bei geschlossenem Entlüftungsventil (5) mit dem Soll-Wert einer luftfreien Flüssigkeit verglichen wird und das Entlüftungsventil (5) so oft und so lange geöffnet wird, bis der Förderdruck bei geschlossenem Entlüftungsventil (5) mit dem Soll-Wert übereinstimmt, woraufhin das Entlüftungsventil (5) geschlossen bleibt.

10. Mischvorrichtung nach Anspruch 9, **dadurch gekennzeichnet, dass** die Steuereinheit die Umdrehungen bzw. Drehwinkelposition der Pumpenwelle bzw. des Pumpenantriebs auswertet.

11. Mischvorrichtung nach einem der vorangegangenen Ansprüche, **dadurch gekennzeichnet, dass** Sensoren am Hubzylinder (1) angeordnet sind, die die Füllhöhe des Behälters (15) messen und mit einer Regeleinheit verbunden sind, die wiederum mit der Pumpe (4) verbunden ist und über welche Regeleinheit die Pumpen (4) zur gleichmäßigen Entleerung von zumindest zwei Behältern (15) steuerbar sind.

12. Verfahren zum Mischen von zumindest zwei Flüssigkeiten, **dadurch gekennzeichnet, dass** in einer Mischvorrichtung nach einem der Ansprüche 1-11 zumindest zwei Behälter (15) angeordnet werden,
eine Folgeplatte (6), die dichtend mit dem Behälter abschließt, auf die Flüssigkeitsoberfläche aufgelegt wird, die Luft zwischen Flüssigkeitsoberfläche und Folgeplatte (6) entfernt wird und
die Flüssigkeiten aus den zumindest zwei Behältern (15) durch jeweils eine Schraubenspindelpumpe (4) gefördert werden und die Materialströme in weiterer Folge vereinigt werden, wodurch die Vermischung erfolgt.

13. Verfahren nach Anspruch 12, **dadurch gekennzeichnet, dass** die Luft zwischen Flüssigkeitsoberfläche und Folgeplatte (6) entfernt wird, indem eine Steuereinheit durch Messen des Förderdrucks am Druckaufnehmer (10) ein automatisiertes Entlüftungsventil (5) steuert, wobei der Förderdruck bei geschlossenem Entlüftungsventil (5) mit dem Soll-Wert einer luftfreien Flüssigkeit verglichen wird und das Entlüftungsventil (5) so oft und so lange geöffnet wird, bis der Förderdruck bei geschlossenem Entlüftungsventil (5) mit dem Soll-Wert übereinstimmt, woraufhin das Entlüftungsventil (5) geschlossen bleibt.

14. Verfahren nach Anspruch 13, **dadurch gekennzeichnet, dass** die Steuereinheit die Umdrehungen bzw. Drehwinkelposition der Pumpenwelle bzw. des Pumpenantriebs auswertet.

15. Verfahren nach einem der Ansprüche 12 bis 14, **dadurch gekennzeichnet, dass** Sensoren, die am Hubzylinder (1) angeordnet sind, die Füllhöhe des Behälters (15) messen, wobei die Sensoren mit einer Regeleinheit verbunden sind, die wiederum mit der Pumpe (4) verbunden ist, wobei die Regeleinheit die Pumpen (4) zur gleichmäßigen Entleerung von zumindest zwei Behältern (15) steuert.

16. Verwendung einer Mischvorrichtung nach einem der Ansprüche 1 bis 11 zum Mischen von zumindest zwei Flüssigkeiten.

17. Verwendung einer Mischvorrichtung nach einem der Ansprüche 1 bis 11 in einem Verfahren nach einem der Ansprüche 12 bis 15.

## Claims

1. A mixing device for mixing at least two liquids, comprising at least two containers (15), each containing a liquid, and at least two pumps (4) for transporting the liquids, which pumps (4) are each arranged on one of the containers (15), wherein the pumps (4) are connected to a follower plate (6) and the follower plate (6) is height-adjustable, wherein the follower plate (6) is lying on the liquid surface and closing sealingly with the container (15), **characterized in that** the pumps (4) are screw spindle pumps.

2. The device of Claim 1, **characterized in that** after the pump (4) - seen in the transport direction - a hose is provided having a valve for adding additives.

3. The mixing device of Claim 1 or 2, **characterized in that** the liquid has a viscosity in the range von 1 mPa.s to 3,000,000 mPa.s.

4. The mixing device of one of the claims 1, 2 or 3, **characterized in that** the liquid has a viscosity in the range of 100,000 mPa.s to 3,000,000 mPa.s.

5. The mixing device of any one of the preceding claims, **characterized in that** the mixing device comprises a roll-in device (7) for easy transport of the containers (15) to the site of discharge.

6. The mixing device of any one of the preceding claims, **characterized in that** the mixing device has transport rolls (12).

7. The mixing device of any one of the preceding claims, **characterized in that** the follower plate (6) has an automated ventilation valve (5).

8. The mixing device of any one of the preceding claims, **characterized in that** a pressure transducer (10) is provided at the pump exit.

9. The mixing device of Claim 8, **characterized in that** a control unit is provided that controls the automated ventilation valve (5) by measuring the transport pressure at the pressure transducer (10), wherein the transport pressure with the ventilation valve (5) closed is compared to the setpoint value of an air-free liquid and the ventilation valve (5) is opened so often and so long until the transport pressure with the ventilation valve (5) closed corresponds to the setpoint value, whereafter the ventilation valve (5) remains closed.

10. The mixing device of Claim 9, **characterized in that** the control unit evaluates the revolutions or rotation angle position of the pump shaft or pump drive.

11. The mixing device of any one of the preceding claims, **characterized in that** sensors are arranged at the lifting cylinder (1), which sensors measure the filling level of the container (15) and are connected to a regulation unit connected to the pump (4), and via which regulation unit the pumps (4) are controllable to uniformly discharge at least two containers (15).

12. A method for mixing at least two liquids, **characterized in that** at least two containers (15) are arranged in a mixing device of any one of the Claims 1-11,
a follower plate (6), which closes sealingly with the container (15), is laid onto the liquid surface, the air between the liquid surface and the follower plate (6) is removed, and
the liquids from the at least two containers (15) are each transported by a screw spindle pump (4), whereafter the material flows are combined, which leads to mixing.

13. The method of Claim 12, **characterized in that** the air between the liquid surface and the follower plate (6) is removed by a control unit controlling an automated ventilation valve (5) by measuring the transport pressure at the pressure transducer (10), wherein the transport pressure with the ventilation valve (5) closed is compared to the setpoint value of an air-free liquid and the ventilation valve (5) is opened so often and so long until the transport pressure with the ventilation valve (5) closed corresponds to the setpoint value, whereafter the ventilation valve (5) remains closed.

14. The method of Claim 13, **characterized in that** the control unit evaluates the revolutions or rotation angle position of the pump shaft or pump drive.

15. The method of any one of the Claims 12 to 14, **characterized in that** sensors arranged at the lifting cylinder (1) measure the filling level of the container (15) and are connected to a regulation unit, which is connected to the pump (4), wherein the regulation unit controls the pumps (4) to uniformly discharge at least two containers (15).

16. Use of a mixing device of any one of the Claims 1 to 11 for mixing at least two liquids.

17. The use of a mixing device of any one of the Claims 1 to 11 in a method according to any one of the Claims 12 to 15.

## Revendications

1. Dispositif de mélange pour mélanger au moins deux liquides, qui comprend au moins deux récipients (15), dans chacun desquels se trouve respectivement un liquide, et au moins deux pompes (4) pour transporter les liquides, chacune desdites pompes (4) étant disposée sur un récipient, les pompes (4) étant reliées avec une plaque suiveuse (6) et la hauteur de la plaque suiveuse (6) étant réglable, la plaque suiveuse (6) reposant sur la surface du liquide et étant placée de manière étanche contre le récipient (15), **caractérisé en ce que** les pompes (4) sont des pompes à vis.

2. Dispositif selon la revendication 1, **caractérisé en ce qu'**un tuyau comprenant une valve pour ajouter des additifs est prévu après la pompe (4), dans le sens de transport.

3. Dispositif de mélange selon une des revendications 1 et 2, **caractérisé en ce que** le liquide a une viscosité comprise entre 1 mPa.s et 3.000.000 mPa.s.

4. Dispositif de mélange selon une des revendications 1 à 3, **caractérisé en ce que** le liquide a une viscosité comprise entre 100.000 mPa.s et 3.000.000 mPa.s.

5. Dispositif de mélange selon une des revendications précédentes, **caractérisé en ce que** le dispositif de mélange comprend un dispositif (7) d'enroulement pour transporter les récipients (15) de manière simple au lieu de vidange.

6. Dispositif de mélange selon une des revendications précédentes, **caractérisé en ce que** le dispositif de mélange comporte des rouleaux (12) de transport.

7. Dispositif de mélange selon une des revendications précédentes, **caractérisé en ce que** la plaque suiveuse (6) comporte une valve d'échappement (5) automatisée.

8. Dispositif de mélange selon une des revendications précédentes, **caractérisé en ce que** un capteur de pression (10) est prévu à la sortie de la pompe.

9. Dispositif de mélange selon la revendication 8, **caractérisé en ce qu'**une unité de commande est prévue, qui commande la valve d'échappement (5) en mesurant la pression de refoulement sur le capteur de pression (10), la pression de refoulement dans l'état fermé de la valve d'échappement (5) étant comparée avec une valeur prédéterminée d'un liquide exempt d'air, et la valve d'échappement (5) étant ouverte autant de fois et jusqu'au moment où la pression de refoulement dans l'état fermé de la valve d'échappement (5) correspond à la valeur prédéterminée, à la suite de quoi la valve d'échappement (5) reste fermée.

10. Dispositif de mélange selon la revendication 9, **caractérisé en ce que** l'unité de commande évalue les rotations ou la position de l'angle de rotation de l'arbre de pompe ou de l'entraînement de pompe.

11. Dispositif de mélange selon une des revendications précédentes, **caractérisé en ce que** des capteurs sont disposés sur le cylindre de levage (1), qui mesurent le niveau de remplissage du récipient (15) et sont reliés avec une unité de réglage, qui est, à son tour, reliée avec la pompe (4) et par laquelle les pompes (4) peuvent être commandées pour vider au moins deux récipients (15) de façon uniforme.

12. Procédé pour mélanger au moins deux liquides, **caractérisé en ce qu'**au moins deux récipients (15) sont disposés dans un dispositif de mélange selon une des revendications 1 à 11,
une plaque suiveuse (6) est placée sur la surface du liquide de manière étanche contre le récipient,
l'air entre la surface du liquide et la plaque suiveuse (6) est éliminé, et
les liquides sont transportés depuis chacun des au moins deux récipients (15) par une pompe à vis (4) respective et ensuite les courants de matériel sont unis, ceci donnant lieu au mélange.

13. Procédé selon la revendication 12, **caractérisé en ce que** l'air entre la surface du liquide et la plaque suiveuse (6) est éliminé par une unité de commande qui commande une valve d'échappement (5) automatisée en mesurant la pression de refoulement sur le capteur de pression (10), la pression de refoulement dans l'état fermé de la valve d'échappement (5) étant comparée avec une valeur prédéterminée d'un liquide exempt d'air, et la valve d'échappement (5) étant ouverte autant de fois et jusqu'au moment où la pression de refoulement dans l'état fermé de la valve d'échappement (5) correspond à la valeur prédéterminée, à la suite de quoi la valve d'échappement (5) reste fermée.

14. Procédé selon la revendication 13, **caractérisé en ce que** l'unité de commande évalue les rotations ou la position de l'angle de rotation de l'arbre de pompe ou de l'entraînement de pompe.

15. Procédé selon une des revendications 12 à 14, **caractérisé en ce que** des capteurs disposés sur le cylindre de levage (1) mesurent le niveau de remplissage du récipient (15), lesdits capteurs étant reliés avec une unité de réglage, qui est, à son tour, reliée avec la pompe (4), ladite unité de réglage commandant les pompes (4) pour vider au moins deux récipients (15) de façon uniforme.

16. Utilisation d'un dispositif de mélange selon une des revendications 1 à 11 pour mélanger au moins deux liquides.

17. Utilisation d'un dispositif de mélange selon une des revendications 1 à 11 dans un procédé selon une des revendications 12 à 15.
